# NEUE EUROPÄISCHE PATENTSCHRIFT

(11) **EP 1 364 261 B2**
(45) Veröffentlichungstag und Bekanntmachung des Hinweises auf die Entscheidung über den Einspruch: **17.09.2014**
(45) Hinweis auf die Patenterteilung: 25.04.2007
(21) Anmeldenummer: 02706680.2
(22) Anmeldetag: 12.02.2002
(51) Int. Cl.: G05B 19/418, G05B 19/43

(54) **SYSTEM ZUR AUTOMATISIERTEN BEHANDLUNG VON FLUIDEN, MIT ANEINANDERREIHBAREN, AUSTAUSCHBAREN PROZESSMODULEN**
SYSTEM FOR AUTOMATED TREATMENT OF FLUIDS WITH INTERCHANGEABLE PROCESS MODULES ARRANGED NEXT TO EACH OTHER
SYSTEME POUR LE TRAITEMENT AUTOMATISE DE FLUIDES POURVU DE MODULES DE PROCESSUS INTERCHANGEABLES ET JUXTAPOSABLES

(30) Priorität: 13.02.2001 DE 10106558
(43) Veröffentlichungstag der Anmeldung: 26.11.2003
(73) Patentinhaber: Siemens Aktiengesellschaft, 80333 München (DE)
(72) Erfinder: BAYER, Thomas, 65812 Bad Soden (DE); FIEBELKORN, Klaus-Peter, 76872 Minfeld (DE); GERLT, Axel, 90766 Fürth (DE); HASSEL, Jörg, 91058 Erlangen (DE); MATEMAN, Richard, NL-7531 VS Enschede (NL); STECKENBORN, Arno, 13589 Berlin (DE); WISSINK, Jereon, NL-7512 DW Enschede (NL)
(86) Internationale Anmeldenummer: PCT/DE2002/000504
(87) Internationale Veröffentlichungsnummer: WO 2002/065221

(56) Entgegenhaltungen:
- EP-A- 0 962 663
- EP-A- 1 059 458
- WO-A-01/36085
- DE-A1- 2 826 480
- DE-U1- 29 821 410
- US-A- 5 766 460
- BERG VAN DEN A ET AL: "MODULAR CONCEPT FOR MINIATURE CHEMICAL SYSTEMS" , DECHEMA MONOGRAPHIEN, VERLAG CHEMIE, WEINHEIM,, DE, VOL. 132, PAGE(S) 109-123 XP000925640 ISSN: 0070-315X Abbildungen 1,10

## Beschreibung

Die Erfindung betrifft ein System zur automatisierten Behandlung von Fluiden, mit aneinanderreihbaren, austauschbaren Prozessmodulen.

Ein solches System ist auch Gegenstand einer älteren deutschen Patentanmeldung mit dem amtlichen Aktenzeichen 199 54 855.2.

Aus der US-A-5 083 364 ist ein System zur Herstellung von Halbleitersubstraten bekannt, das aus mehreren aneinandergereihten Prozessmodulen besteht. Die Prozessmodule werden über einen gemeinsamen Medienbus mit Daten, Energie und benötigen Chemikalien, Gasen und Flüssigkeiten versorgt; die Entsorgung der Fluide erfolgt ebenfalls über den Medienbus. Mindestens eines der Prozessmodule ist für die Einspeisung der Fluide in den Fluidbus bzw. die Entsorgung der Fluide ausgebildet. Der Medienbus weist elektrische Leitungen für die Daten- und Energieübertragung und unterschiedliche Rohrleitungen für die verschiedenen Fluide auf. In einem durch die Größe der Prozessmodule vorgegebenen Rasterabstand sind entlang des Medienbusses Anschlusskästen mit elektrischen Anschlüssen und Fluidanschlüssen vorgesehen, an denen die einzelnen Prozessmodule mit entsprechenden Gegenanschlüssen anschließbar sind. Die Fluidanschlüsse sind mit selbstschließenden Ventilen ausgestattet, die bei nicht vorhandener Verbindung mit den entsprechenden Gegenanschlüssen eines Prozessmoduls den betreffenden Fluidanschluss nach außen abdichten. Innerhalb des bekannten Systems können daher je nach Anforderung einzelne Prozessmodule auf vergleichsweise einfache Weise hinzugefügt, entfernt oder ausgetauscht werden.

Der Fluidbus des bekannten Systems ist im Hinblick auf die speziell für die Herstellung von Halbleitersubstraten benötigten Fluide ausgebildet und weist für diese unterschiedliche Rohrleitungen mit zum Teil unterschiedlichen Durchmessern und Querschnitten auf. Die Variabilität und Einsatzmöglichkeit des bekannten Systems ist daher auf diesen speziellen Herstellungsprozess beschränkt.

Aus der EP-A-0 303 565 ist ein System zur Herstellung insbesondere eines chemischen Produkts bekannt. Die unterschiedlichen Herstellungsschritte erfolgen in unterschiedlichen feststehenden oder mobilen Prozessmodulen, die jeweils eine Steuerungseinheit und eine Chemieeinheit umfassen, wobei innerhalb der Chemieeinheit der betreffende Herstellungsschritt gesteuert durch die Steuerungseinheit ausgeführt wird. Die Steuerungseinheiten der unterschiedlichen Prozessmodule sind über Datenleitungen an einem Prozessleitsystem angeschlossen. Die Chemieeinheiten innerhalb der Prozessmodule werden individuell über Ver- und Entsorgungsleitungen mit den bei der Herstellung benötigten bzw. anfallenden Stoffen versorgt bzw. entsorgt. Die angestrebte Modularität und Flexibilität ist daher im wesentlichen steuerungsseitig, nicht jedoch prozessseitig ausgebildet.

Der Erfindung liegt die Aufgabe zugrunde, ein System zur automatisierten Behandlung von Fluiden mit höchstmöglicher Modularität und damit verbundener Flexibilität anzugeben.

Gemäß der Erfindung wird die Aufgabe gelöst durch ein System zur automatisierten Behandlung von Fluiden mit aneinanderreihbaren, austauschbaren Prozessmodulen, die jeweils eine Steuerungseinheit und eine von dieser zur Durchführung einer modulspezifischen Prozessfunktion im Rahmen der Behandlung der Fluide steuerbare Fluideinheit aufweisen, und mit mindestens einer Verbindungseinheit, mit der je nach Montagestellung mindestens zwei unterschiedliche Verbindungsmuster eingestellt werden können, wobei die Steuerungseinheiten über einen den Prozessmodulen gemeinsamen Datenbus und die Fluideinheiten über einen mehrere Kanäle aufweisenden Fluidbus miteinander verbunden sind, wobei für zumindest einen Teil der Kanäle innerhalb jedes Prozessmoduls ein Fluidbus-Abschnitt ausgebildet ist, der an seinen Enden Fluidbus-Schnittstellen aufweist, und wobei zwischen die jeweils benachbarten Fluidbus-Schnittstellen zweier aufeinanderfolgender Prozessmodule die mindestens eine Verbindungseinheit in mindestens zwei unterschiedlichen Montagestellungen schaltbar ist, in denen sie die an den benachbarten Fluidbus-Schnittstellen der beiden Prozessmodule jeweils endenden Kanalabschnitte in unterschiedlichen Verbindungsmustern miteinander verbindet.

Unter Behandlung von Fluiden ist hier insbesondere deren Analyse oder Synthese einschließlich der dazu erforderlichen Nebenfunktionen zu verstehen, wobei es sich bei den Fluiden um Flüssigkeiten, Gase oder mittels Trägerfluiden transportierte Feststoffe handeln kann. Die Prozessmodule werden in Abhängigkeit von den innerhalb des Prozesses auszuführenden Prozessfunktionen ausgewählt und in geeigneter Reihenfolge aneinandergereiht. Bei zumindest einem Teil der Kanäle des Fluidbusses können die Kanalabschnitte von benachbarten Prozessmodulen durch Zwischenschaltung einer Verbindungseinheit nach einem vorgegebenen Verbindungsmuster miteinander verbunden werden, wobei je nach Montagestellung der Verbindungseinheit mit dieser mindestens zwei unterschiedliche Verbindungsmuster eingestellt werden können. Damit wird eine weitestgehende Modularität und Flexibilität des erfindungsgemäßen Systems nicht nur steuerungsseitig sondern auch auf der Prozessseite gewährleistet, weil im Unterschied zu den bekannten Systemen keine feste Vorbelegung der Kanäle erfolgt. Da mit ein und derselben Verbindungseinheit unterschiedliche Verbindungsmuster zwischen den Kanalabschnitten benachbarter Prozessmodule realisierbar sind, werden nur ein oder nur einige wenige unterschiedliche Grundtypen von Verbindungseinheiten benötigt, um die zum Aufbau unterschiedlicher Systeme jeweils benötigten Prozessmodule fluidseitig individuell verschalten zu können.

Die Notwendigkeit, Kanäle des Fluidbusses zwischen benachbarten Prozessmodulen individuell verbinden zu können, besteht insbesondere für solche Kanäle, in denen die im Rahmen des Prozesses zu behandelnden Fluide, darunter Edukte, Produkte und zu analysierende Fluide, geführt werden. Andere Fluide, insbesondere Versorgungsfluide, wie Wasser, Kühlmittel, Stickstoff, Sauerstoff oder Druckluft, werden dagegen in der Regel von allen Prozessmodulen parallel benötigt. Daher sind die über die Verbindungseinheiten unterschiedlich verbindbaren Fluidbus-Abschnitte in den Prozessmodulen vorzugsweise nur für einen Teil der Kanäle des Fluidbusses ausgebildet, während für die übrigen Kanäle des Fluidbusses in den Prozessmodulen jeweils ein weiterer Fluidbus-Abschnitt derart ausgebildet ist, dass bei der Aneinanderreihung von Prozessmodulen die Kanalabschnitte dieser weiteren Fluidbus-Abschnitte unter Umgehung von zwischengeschalteten Verbindungseinheiten direkt miteinander verbindbar sind. Auf diese Weise wird die Anzahl der zwischen den Prozessmodulen individuell verbindbaren Kanalabschnitte auf ein notwendiges Maß beschränkt, so dass damit auch die Zahl der unterschiedlichen benötigten Verbindungsmuster und damit die Anzahl der unterschiedlichen benötigten Grundtypen von Verbindungseinheiten verringert wird. Während die individuell miteinander verbindbaren Kanalabschnitte des Fluidbusses vorzugsweise alle gleichartig ausgebildet sind, um z. B. zu verhindern, dass Kanalabschnitte mit unterschiedlichen Kanaldurchmessern miteinander verbunden werden, können die übrigen, unter Umgehung der Verbindungseinheiten durch direkte Verbindung der Kanalabschnitte in den Prozessmodulen gebildeten Kanäle je nach durchzuleitendem Fluid unterschiedliche Kanaldurchmesser und/oder Materialien der Kanalwand aufweisen.

Bei einer bevorzugten Ausbildung des erfindungsgemäßen Systems sind die Fluidbus-Schnittstellen an den bei Aneinanderreihung der Prozessmodule einander zugewandten Seiten der Prozessmodule ausgebildet, wobei die Verbindungseinheit zwischen die Prozessmodule montierbar ist. Ein wesentlicher Vorteil dieser Ausführungsform besteht darin, dass das System durchgängig durch Aneinanderreihen von Prozessmodulen und Verbindungseinheiten aufgebaut wird. Dadurch können durchgängig einheitliche Montagetechniken verwendet werden, die zu einem entsprechend einfachen und betriebssicheren Aufbau des Systems führen. Darüber hinaus entspricht die Anordnung der Prozessmodule und der zwischengeschalteten Verbindungseinheiten weitgehend der logischen Struktur des Prozesses, so dass der Anwender das System in Abhängigkeit von Prozessschaltbildern o. ä. einfach und fehlersicher aufbauen kann. Sollen die Kanalabschnitte aufeinanderfolgender Prozessmodule in einem parallelen Verbindungsmuster miteinander verbunden werden, so können gegebenenfalls die beiden Prozessmodule auch ohne zwischenliegende Verbindungseinheit direkt aneinander montiert werden. Umgekehrt können zwei oder auch mehr Verbindungseinheiten in Reihe zwischen jeweils zwei Prozessmodule geschaltet werden, um ein aus den Verbindungsmustern der beteiligten Verbindungseinheiten zusammengesetztes neues Verbindungsmuster zu realisieren. Dies ermöglicht eine weitere Reduzierung der Anzahl benötigter Grundtypen von Verbindungseinheiten bis hin zu einem einzigen Grundtyp mit beispielsweise vier Montagestellungen bzw. Verbindungsmustern, wobei mit zwei in Reihe geschalteten Verbindungseinheiten bis zu 16 Verbindungsmuster realisierbar sind.

Bei einer alternativen Ausbildung des erfindungsgemäßen Systems sind die Fluidbus-Schnittstellen an bei Aneinanderreihung der Prozessmodule fluchtenden Seiten der Prozessmodule ausgebildet, wobei die Verbindungseinheit an diese Seiten, dabei jeweils zwei aufeinanderfolgende Prozessmodule überbrückend, montierbar ist. Diese Ausführungsform ist insbesondere dann von Vorteil, wenn die Prozessmodule in einem vorgegebenen Raster, beispielsweise auf einer Grundplatte, montiert werden und eine Zwischenschaltung von Verbindungseinheiten den Rasterabstand der Prozessmodule verändern oder stören würde. Außerdem können zunächst alle Prozessmodule und danach die Verbindungseinheiten montiert werden, wobei die Verbindungseinheiten nachträglich ausgetauscht werden können, ohne dass dazu einzelne Prozessmodule ausgebaut werden müssen.

Um den Aufbau des Systems zu erleichtern und Aufbaufehler schnell zu erkennen, trägt die Verbindungseinheit vorzugsweise für jede mögliche Montagestellung jeweils ein Informationsfeld zur Anzeige des durch die betreffende Montagestellung einstellbaren Verbindungsmusters, wobei in jeder Montagestellung der Verbindungseinheit das zugehörige Informationsfeld ein und dieselbe Lage einnimmt. Das jeweils eingestellte Verbindungsmuster ist daher für den Anwender sofort erkennbar. In diesem Zusammenhang kann vorgesehen sein, dass weitere Informationsfelder, welche an den Prozessmodulen ausgebildet sind und deren Prozessfunktionen anzeigen, in einer gemeinsamen Sichtebene mit den die eingestellten Verbindungsmuster anzeigenden Informationsfeldern der Verbindungseinheiten liegt. Die einzelnen Anzeigen der unterschiedlichen Informationsfelder geben so einen optischen Überblick über das aufgebaute System und können sich dazu beispielsweise zu einem Prozessschaltbild ergänzen.

Bei einer bevorzugten Weiterbildung des erfindungsgemäßen Systems ist die Verbindungseinheit in der jeweiligen Montagestellung in eine Aufnahmevorrichtung einsetzbar, welche Detektionsmittel zum Erkennen der jeweiligen Montagestellung aufweist; die Detektionsmittel sind zur Übertragung von die jeweilige Montagestellung angebenden Informationen an dem Datenbus anschließbar. Dadurch kann sich eine an dem Datenbus angeschlossene übergeordnete Steuerung alle wesentlichen Informationen über den Aufbau des Systems einschließlich der Fluidbus-Verbindungen zwischen den einzelnen Prozessmodulen automatisch beschaffen und anhand dieser Informationen beispielsweise den Aufbau des Systems visualisieren, automatisch Aufbaufehler erkennen und den Prozessablauf im System steuern. Die Aufnahmevorrichtung für die Verbindungseinheit kann an den Prozessmodulen ausgebildet sein oder alternativ zusammen mit der in ihr eingesetzten Verbindungseinheit ein Verbindungsmodul bilden, welches bei der Aneinanderreihung der Prozessmodule zwischen diese einfügbar ist. Im ersten Fall wird die Aufnahmevorrichtung beispielsweise von zur Aufnahme und Halterung der Verbindungseinheiten geeigneten Aussparungen an den Prozessmodulen gebildet, wobei die Detektionsmittel in den Prozessmodulen, beispielsweise als Bestandteil ihrer Steuerungseinheiten, integriert sind. Im Falle der Verbindungsmodule weisen diese vorzugsweise den gleichen Grundaufbau wie die Prozessmodule auf, wobei die Verbindungseinheit und die Detektionsmittel in dem Verbindungsmodul der Fluideinheit bzw. der Steuerungseinheit in dem Prozessmodul entsprechen. Dabei kann innerhalb der Aufnahmevorrichtung ein Datenbus-Abschnitt ausgebildet sein, der zusammen mit in den angrenzenden Prozessmodulen ausgebildeten Datenbus-Abschnitten den Datenbus bildet. Außerdem kann für die nicht über die Verbindungseinheit zu verbindenden übrigen Kanäle des Fluidbusses innerhalb der Aufnahmevorrichtung ein zusätzlicher Fluidbus-Abschnitt ausgebildet ist, der beim Einfügen des Verbindungsmoduls zwischen zwei Prozessmodule die Kanalabschnitte der in diesen Prozessmodulen enthaltenen weiteren Fluidbus-Abschnitte miteinander verbindet.

Zur weiteren Erläuterung der Erfindung wird im folgenden auf die Figuren der Zeichnung bezug genommen; im einzelnen zeigen
- Figur 1: ein Ausführungsbeispiel des aus unterschiedlichen Prozessmodulen gebildeten erfindungsgemäßen Systems in Form eines vereinfachten Blockschaltbildes,
- Figur 2: eine Variante des Ausführungsbeispiels nach Figur 1,
- Figur 3: eine weitere Variante des Ausführungsbeispiels nach Figur 1,

- Figur 4: ein Beispiel für einen einfachen Prozess in Form eines Prozessschaltbildes,
- Figur 5: ein Ausführungsbeispiel für das nach Maßgabe des in Figur 4 gezeigten Prozessschaltbildes aufgebaute erfindungsgemäße System in vereinfachter perspektivischer Darstellung und
- Figur 6: eine Variante des Ausführungsbeispiels nach Figur 5.

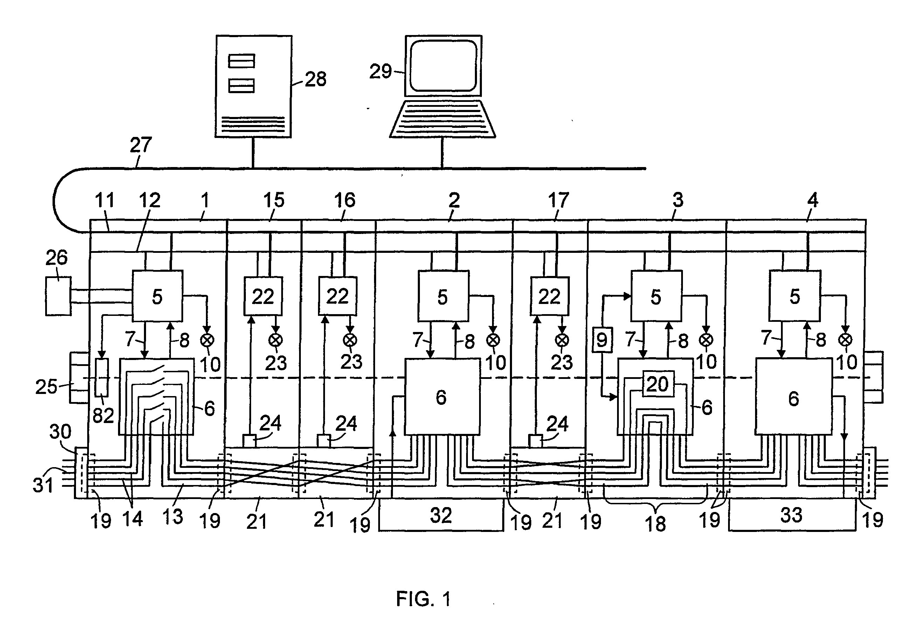

Figur 1 zeigt ein System zur automatisierten Behandlung von Fluiden, z.B. unterschiedliche Flüssigkeiten oder Gase. Unter Behandlung ist zum Beispiel die Analyse der Fluide und/oder die Synthese durch chemische Reaktionen von Fluiden einschließlich der dazu erforderlichen Nebenfunktionen wie Aufbereiten, Mischen, Filtrieren, Förderung oder Druckaufbau mittels Pumpen, Erwärmung, Verdampfung usw. zu verstehen. Das System besteht aus unterschiedlichen aneinandergereihten Prozessmodulen 1, 2, 3 und 4, in denen modulspezifische Prozessfunktionen automatisiert ausgeführt werden. Bei den Prozessmodulen 1 bis 4 kann es sich entsprechend den oben genannten Behandlungsfunktionen um verschiedenartige Analysenmodule, Reaktormodule mit beispielsweise Mikroreaktoren, Pumpenmodule, Filtermodule, Energieversorgungsmodule, Fluidversorgungs- und -entsorgungsmodule usw. handeln. Jedes Prozessmodul 1 bis 4 weist jeweils eine Steuerungseinheit 5 und eine Fluideinheit 6 auf, wobei die eigentliche Prozess- oder Behandlungsfunktion innerhalb der Fluideinheit 6 in Abhängigkeit von Steuersignalen 7 der Steuerungseinheit 5 ausgeführt wird. In der Fluideinheit 6 aufgenommene Prozesssignale 8, z.B. Druckwerte oder Analysenwerte, werden an die Steuerungseinheit 5 übertragen. Wie am Beispiel des Prozessmoduls 3 gezeigt ist, können an einzelnen Prozessmodulen Bedienelemente 9 vorgesehen sein, über die Einstellungen an der Steuerungseinheit 5 und/oder der Fluideinheit 6 vorgenommen werden können. Ferner weisen die Prozessmodule 1 bis 4 von den Steuerungseinheiten 5 ansteuerbare Anzeigeelemente 10 zur Anzeige von Betriebs- und/oder Fehlerzuständen auf.

Die Steuerungseinheiten 5 in den unterschiedlichen Prozessmodulen 1 bis 4 sind über einen Datenbus 11 und einen Energieversorgungsbus 12 miteinander verbunden. Die Fluideinheiten 6 sind über einen Fluidbus 13 miteinander verbunden, der aus einer Mehrzahl von Kanälen 14 besteht, in denen die jeweils benötigten Fluide geführt werden. Der Datenbus 11, der Energieversorgungsbus 12 und der Fluidbus 13 sind dabei jeweils aus innerhalb der aneinandergereihten Prozessmodule 1 bis 4 sowie innerhalb von Verbindungsmodulen 15, 16 und 17 verlaufenden Bus-Abschnitten zusammengesetzt, welche an ihren Enden Bus-Schnittstellen aufweisen. So weisen beispielsweise die Fluidbus-Abschnitte 18 in den Prozessmodulen an ihren Enden jeweils zwei Fluidbus-Schnittstellen 19 auf, die an den bei Aneinanderreihung der Prozessmodule einander zugewandten Seiten der Prozessmodule ausgebildet sind. Innerhalb der Prozessmodule können die Kanalabschnitte des Fluidbus-Abschnitts 18 je nach Prozessfunktion unterschiedlich verlaufen. So enthält beispielsweise die Fluideinheit 6 des Prozessmoduls 3 einen Reaktor 20 mit zwei Eingangskanälen und einem Ausgangskanal; die übrigen Kanäle des Fluidbus-Abschnitts 18 verlaufen parallel zwischen den Fluidbus-Schnittstellen 19, so dass die darin geführten Fluide unbeeinflusst zu dem nächstfolgenden Prozessmodul 4 gelangen.

Im Falle der unmittelbar aneinandergrenzenden Prozessmodule 3 und 4 sind die an den benachbarten Fluidbus-Schnittstellen 19 beider Prozessmodule 3 und 4 jeweils endenden Kanalabschnitte direkt miteinander verbunden. Bei den Prozessmodulen 1, 2 und 3 sind dagegen die Kanalabschnitte der aufeinanderfolgenden Prozessmodule 1 und 2 bzw. 2 und 3 individuell nach vorgegebenen Verbindungsmustern miteinander verbunden. Dies erfolgt durch Verbindungseinheiten 21, die zwischen die Fluidbus-Schnittstellen 19 der aufeinanderfolgenden Prozessmodule 1 und 2 bzw. 2 und 3 geschaltet sind und das jeweilige Verbindungsmuster herstellen. Die Verbindungseinheiten 21 sind hier Bestandteil der Verbindungsmodule 15, 16 und 17, welche bei der Aneinanderreihung der Prozessmodule 1 bis 4 zwischen den Prozessmodulen 1 und 2 bzw. 2 und 3 angeordnet werden. Jedes Verbindungsmodul 15 bis 17 enthält, vergleichbar mit den Prozessmodulen 1 bis 4, eine Steuerungseinheit 22, die an dem Datenbus 11 und dem Energieversorgungsbus 12 angeschlossen ist. Die Steuerungseinheit 22 steuert an dem Verbindungsmodul 15 bis 17 angeordnete Anzeigeelemente 23 und erhält von Detektionsmitteln 24 Informationen über das mit der Verbindungseinheit 21 eingestellte Verbindungsmuster. Wie untenstehend noch näher erläutert wird, ist die Verbindungseinheit 21 in mindestens zwei unterschiedlichen Montagestellungen zwischen die jeweils benachbarten Fluidbus-Schnittstellen 19 zweier aufeinanderfolgender Prozessmodule, z. B. 2 und 3, schaltbar, in denen sie die an den benachbarten Fluidbus-Schnittstellen 19 der beiden Prozessmodule 2 und 3 jeweils endenden Kanalabschnitte in unterschiedlichen Verbindungsmustern miteinander verbindet. Ferner können, wie ebenfalls untenstehend noch näher erläutert wird, die über die Verbindungseinheiten 21 unterschiedlich verbindbaren Fluidbus-Abschnitte 18 in den Prozessmodulen 1 bis 4 nur einen Teil der Kanäle des gesamten Fluidbusses 13 enthalten, wobei die übrigen Kanäle unter Umgehung der zwischengeschalteten Verbindungseinheiten 21 direkt miteinander verbindbar sind.

Die Prozessmodule 1 bis 4 sind mit den zwischengefügten Verbindungsmodulen 15 bis 17 auf einem gemeinsamen Träger 25, hier z. B. einer Hutschiene, nebeneinander gehalten, wobei durch Aufschieben oder Aufstecken der jeweils benötigten Prozessmodule 1 bis 4 und Verbindungsmodule 15 bis 17 auf die Hutschiene 25 die Busse 11 bis 13 gebildet werden.

Die Prozessmodule 1 bis 4 können zusätzlich zu den Verbindungen mit dem Datenbus 11, dem Energieversorgungsbus 12 und dem Fluidbus 13 weitere externe Anschlüsse aufweisen. Bei dem gezeigten Beispiel dient das Prozessmodul 1 zur Bereitstellung von Grundfunktionen für das System, wozu die Steuerungseinheit 5 an einer externen Stromversorgungsquelle 26 und über eine Datenverbindung, z.B. einen externen Bus 27, an einer übergeordneten Steuerung 28, beispielsweise einem Leitsystem mit Bedien- und Visualisierungseinrichtung 29, angeschlossen ist. Für die Energieversorgung kommt alternativ auch ein Batterie- oder Brennstoffzellenmodul in Betracht. Über einen Fluidbusstecker 30 können an dem Fluidbus 13 externe Fluidleitungen 31 zur Einspeisung bzw. zum Abführen benötigter Fluide in das System angeschlossen werden, wobei die Fluideinheit 6 beispielsweise die Weiterleitung der Fluide zu den folgenden Prozessmodulen 2 bis 4 steuern kann. Bei dem Prozessmodul 2 erfolgt die Einspeisung eines Fluids in das System über einen an das Prozessmodul 2 ansteckbaren Versorgungsbehälter 32, während z.B. an dem Prozessmodul 4 ein Entsorgungsbehälter 33 zur Aufnahme eines Fluids aus dem System angesteckt ist.

Die Steuerungseinheiten 5 in den Prozessmodulen 1 bis 4 übernehmen die Steuerung der modulspezifischen Prozessfunktionen, wobei sie Instruktionen von der übergeordneten Steuerung 28 erhalten und Prozessinformationen an diese abgeben. Außerdem dienen die Steuerungseinheiten 5 ebenso wie die Steuerungseinheiten 22 in den Verbindungsmodulen 15 bis 17 dazu, die Auswahl, Anordnung und Verschaltung der Module 1 bis 4 und 15 bis 17 an die übergeordnete Steuerung 28 zu melden, die anhand dieser Informationen den Aufbau des Systems visualisieren und automatisch Aufbaufehler erkennen kann. Aufbaufehler können auch direkt mittels der Anzeigeelemente 10 und 23 an den Modulen 1 bis 4 und 15 bis 17 angezeigt werden. Darüber hinaus kann die übergeordnete Steuerung 28 auch alle verwendeten Module 1 bis 4 und 15 bis 17 anhand von ihnen bei der Herstellung individuell zugewiesenen Seriennummern identifizeren, so dass beispielsweise bei der Wiederholung von gleichen Prozessabläufen sichergestellt werden kann, dass jedesmal dieselben Module 1 bis 4 und 15 bis 17 verwendet werden.

Aus Sicherheitsgründen sind die Module 1 bis 4 und 15 bis 17 während des Prozessablaufs in dem System durch eine automatisch betätigbare Verriegelungseinrichtung 82 gegeneinander auf dem Träger 25 mechanisch verriegelt. Die Verriegelung wird auf Veranlassung der übergeordneten Steuerung 28 durch die Steuerungseinheiten 5 und 22 in den Modulen 1 bis 4 und 15 bis 17 oder, wie hier gezeigt, für alle Module 1 bis 4 und 15 bis 17 durch die Steuerungseinheit 5 des Prozessmoduls 1, aufgehoben, wenn der Prozessablauf in dem System beendet ist und ggf. die Kanäle 14 und sonstigen fluidführenden Teile des Systems mit einem Reinigungsfluid durchspült worden sind

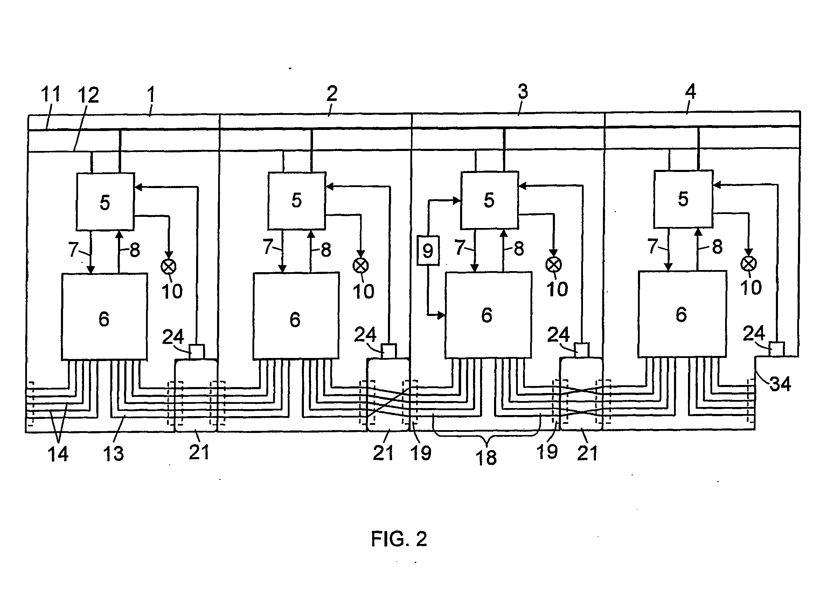

Das in Figur 2 gezeigte System zur automatisierten Behandlung von Fluiden unterscheidet sich von dem nach Figur 1 dadurch, dass die Prozessmodule 1 bis 4 unmittelbar, d. h. ohne Zwischenschaltung von Verbindungsmodulen, aneinandergereiht sind. Dabei weisen die Prozessmodule 1 bis 4 selbst Aufnahmevorrichtungen 34, beispielsweise in Form von Aussparungen, zur Aufnahme der Verbindungseinheiten 21 auf. Die Detektionsmittel 24 zur Erkennung der jeweils verwendeten Verbindungseinheit 21 sind Bestandteil des jeweiligen Prozessmoduls 1 bis 4, dessen Steuerungseinheit 5 auch die Weitergabe der Informationen über das mit der Verbindungseinheit 21 eingestellte Verbindungsmuster an die übergeordnete Steuerung (28, Figur 1) übernimmt.

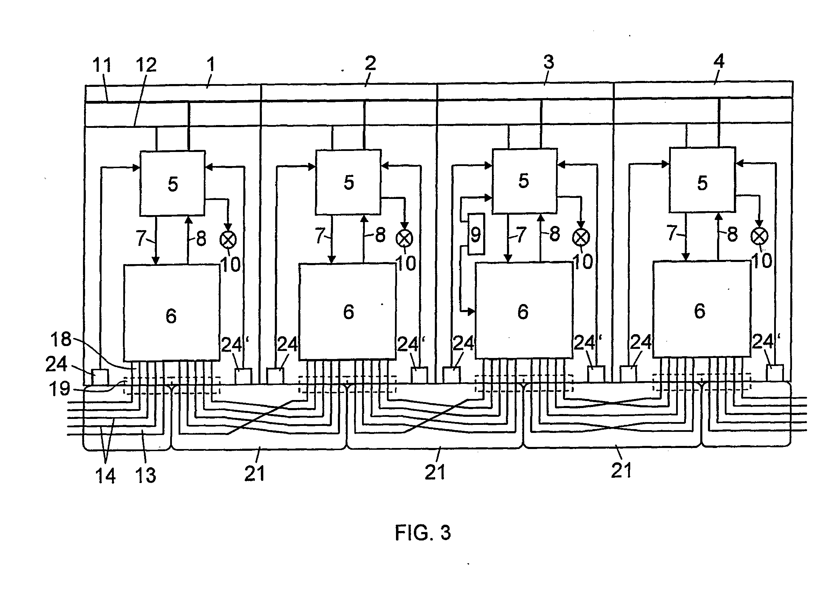

Bei dem in Figur 3 gezeigten System zur automatisierten Behandlung von Fluiden sind im Unterschied zu den vorstehend beschriebenen Beispielen die Fluidbus-Schnittstellen 19 nicht an den bei Aneinanderreihung der Prozessmodule 1 bis 4 einander zugewandten Seiten, sondern an fluchtenden Seiten der Prozessmodule 1 bis 4 ausgebildet, wobei die Verbindungseinheiten 21 an diese Seiten, dabei jeweils zwei aufeinanderfolgende Prozessmodule 1 und 2, 2 und 3, 3 und 4 überbrückend, montierbar sind. Auch hier sind die Detektionsmittel 24 und 24' zur Erkennung der jeweils verwendeten Verbindungseinheit 21 Bestandteil des jeweiligen Prozessmoduls 1 bis 4, dessen Steuerungseinheit 5 die Informationen über das mit der Verbindungseinheit 21 eingestellte Verbindungsmuster an die übergeordnete Steuerung weitergibt.

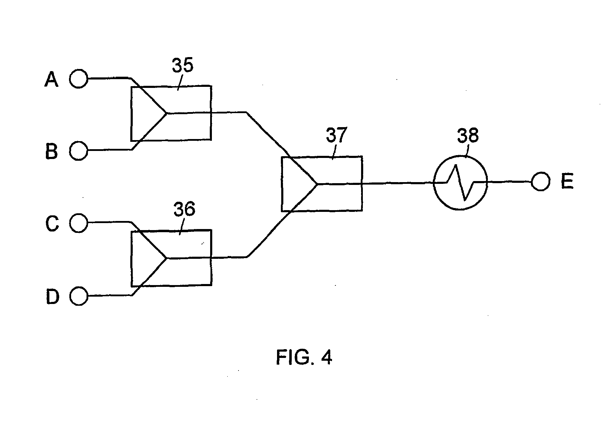

Im folgenden wird der konstruktive Aufbau des erfindungsgemäßen Systems anhand weiterer Beispiele erläutert. Entsprechend dem in Figur 4 gezeigten Prozessschaltbild sollen vier Fluide A, B, C und D gemischt und anschließend unter Druck und Wärmezufuhr zu einem Produkt E verarbeitet werden. Dazu werden die Fluide A, B, C und D in drei Mischern 35, 36 und 37 nacheinander zusammengeführt, wobei das dabei erhaltene Gemisch anschließend bei vorgegebenem Druck und vorgegebener Temperatur eine Verweilstrecke 38 durchläuft.

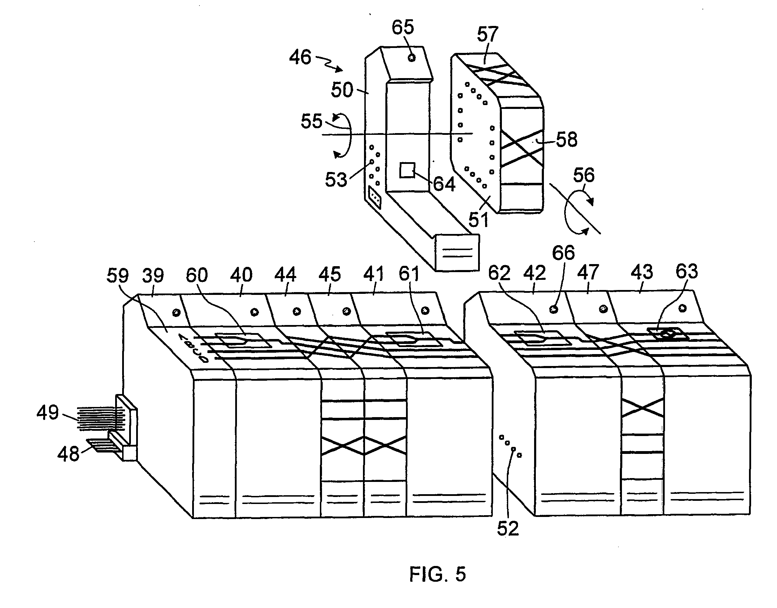

Figur 5 zeigt einen in Abhängigkeit von dem Prozessschaltbild nach Figur 4 vorgenommenen Aufbau des erfindungsgemäßen Systems, bestehend aus einem Versorgungsmodul 39 zum Zuführen der Fluide A, B, C und D, drei identischen Mischermodulen 40, 41 und 42 und einem Verweilstreckenmodul 43. Die Prozessmodule 39 bis 43 sind unter Zwischenfügung von Verbindungsmodulen 44, 45, 46 und 47 aneinandergereiht, wobei sich, entsprechend der Darstellung in Figur 1, ein Daten- und Energieversorgungsbus 48 und ein hier z. B. 10-kanaliger Fluidbus 49 durch die Module 39 bis 47 erstrecken. Wie bei dem aus der Reihe der Module 39 bis 47 herausgenommenen Verbindungsmodul 46 zu sehen ist, bestehen diese jeweils aus einer Aufnahmevorrichtung 50 und einer in diese einsetzbaren Verbindungseinheit 51.

Die Notwendigkeit, die Kanäle des Fluidbusses 49 zwischen benachbarten Prozessmodulen, z. B. 41 und 42, individuell verbinden zu können, besteht insbesondere für solche Kanäle, in denen die im Rahmen des Prozesses zu behandelnden Fluide geführt werden. Andere Fluide, insbesondere Versorgungsfluide, wie Wasser, Kühlmittel, Stickstoff, Sauerstoff oder Druckluft, werden dagegen in der Regel von allen Prozessmodulen 39 bis 43 parallel benötigt. Für vier der 10 Kanäle des Fluidbusses 49, hier z. B. die Kanäle, welche die Fluide A, B, C und D führen, ist daher in jedem Prozessmodul 39 bis 43 jeweils ein Fluidbus-Abschnitt ausgebildet, der an den bei Aneinanderreihung der Prozessmodule 39 bis 43 einander gegenüberliegenden Seiten der Prozessmodule 39 bis 43 in Fluidbus-Schnittstellen 52 endet. Die Fluidbus-Schnittstellen 52 sind dabei so angeordnet, dass beim Einfügen eines Verbindungsmoduls, z. B. 46, zwischen zwei Prozessmodule 41 und 42 die an den Fluidbus-Schnittstellen 52 endenden Kanalabschnitte der beiden Prozessmodule 41 und 42 durch die Verbindungseinheit 51 des Verbindungsmoduls 46 in einem vorgegebenen Verbindungsmuster miteinander verbunden werden.

Für die übrigen sechs Kanäle des Fluidbusses 49 sind in den Prozessmodulen 39 bis 43 weitere Fluidbus-Abschnitte ausgebildet, die bei der Aneinanderreihung der Prozessmodule 39 bis 43 durch zusätzliche Fluidbus-Abschnitte 53 in den Aufnahmevorrichtungen 50 der zwischengeschalteten Verbindungsmodule 44 bis 47 unter Umgehung der Verbindungseinheiten 51 direkt miteinander verbunden werden. In gleicher Weise ist auch innerhalb jeder Aufnahmevorrichtung 50 ein Daten- und Energieversorgungsbus-Abschnitt ausgebildet ist, der zusammen mit in den angrenzenden Prozessmodulen, z. B. 41 und 42, ausgebildeten Bus-Abschnitten den Daten- und Energieversorgungsbus 48 bildet.

Wie durch Pfeile 55 und 56 angedeutet ist, ist die Verbindungseinheit 51 in unterschiedlichen Montagestellungen in die Aufnahmevorrichtung 50 einsetzbar, so dass die an den benachbarten Fluidbus-Schnittstellen 52 der beiden Prozessmodule 41 und 42 endenden Kanalabschnitte je nach Montagestellung in unterschiedlichen Verbindungsmustern miteinander verbunden werden. Die Verbindungseinheit 51 trägt für jede mögliche Montagestellung jeweils ein Informationsfeld 57, 58 zur Anzeige des damit einstellbaren Verbindungsmusters. Dasjenige Informationsfeld, z. B. 57, welches in der aktuellen Montagestellung der Verbindungseinheit 51 das damit eingestellte Verbindungsmuster anzeigt, liegt dabei zusammen mit anderen Informationsfeldern 59, 60, 61, 62 und 63, welche an den Prozessmodulen 39 bis 43 ausgebildet sind und deren Prozessfunktionen anzeigen, in einer gemeinsamen Sichtebene, so dass sich die einzelnen Anzeigen der unterschiedlichen Informationsfelder zu einer Anzeige des Prozessschaltbildes ergänzen. Die Aufnahmevorrichtung 50 weist Detektionsmittel 64 auf, die die jeweilige Montagestellung der Verbindungseinheit 51 durch mechanisches, elektrisches oder optisches Abtasten einer Kodierung an der Verbindungseinheit 51 erkennen und die zugehörigen Informationen über das mit der Verbindungseinheit 51 aktuell eingestellte Verbindungsmuster auf den Datenbus 48 übertragen, so wie dies oben bereits anhand von Figur 1 erläutert wurde. Erkennt eine an dem Datenbus 48 angeschlossene übergeordnete Steuerung ein falsch eingestelltes Verbindungsmuster, so wird dies an das betroffene Verbindungsmodul 46 gemeldet und dort mittels eines Anzeigeelements 65 angezeigt. In gleicher Weise verfügen auch die Prozessmodule 39 bis 43 über Anzeigeelemente 66 zur Fehleranzeige.

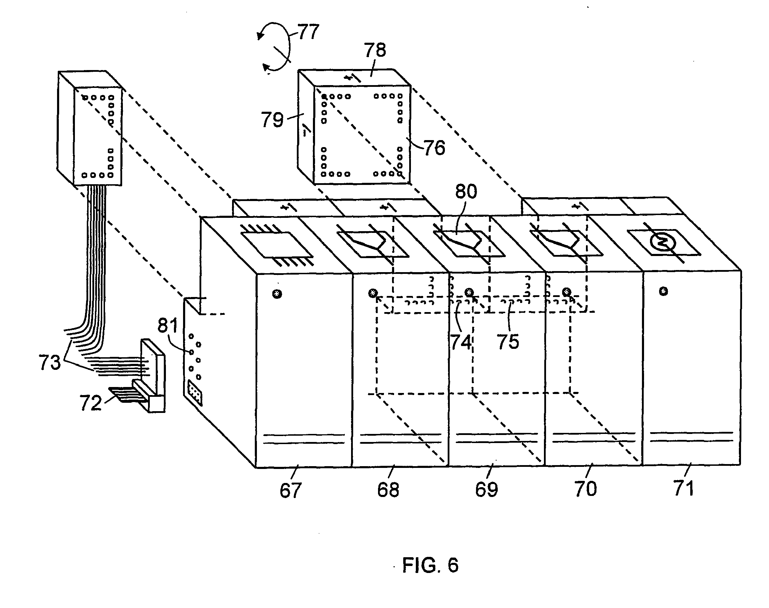

Bei dem in Figur 6 gezeigten Ausführungsbeispiel des erfindungsgemäßen Systems sind zu seinem Aufbau benötigte Prozessmodule 67, 68, 69, 70 und 71 unmittelbar aneinandergereiht, wobei sich, entsprechend der Darstellung in Figur 3, ein Daten- und Energieversorgungsbus 72 und ein mehrkanaliger Fluidbus 73 durch die Prozessmodule 67 bis 71 erstrecken.

Für eine vorgegebene Anzahl der Kanäle des Fluidbusses 73 ist in jedem der Prozessmodule 67 bis 71 jeweils ein Fluidbus-Abschnitt ausgebildet, der an seinen beiden Enden Fluidbus-Schnittstellen aufweist; diese sind an den bei Aneinanderreihung der Prozessmodule 67 bis 71 fluchtenden Rückseiten der Prozessmodule 69 und 70 ausgebildet. Die an den Fluidbus-Schnittstellen 74 und 75 endenden Kanalabschnitte zweier aufeinanderfolgender Prozessmodule, hier z. B. 69 und 70, werden durch eine Verbindungseinheit 76 in einem vorgegebenen Verbindungsmuster miteinander verbunden, wozu die Verbindungseinheit 76 an die Rückseiten der Prozessmodule 69 und 70, diese dabei überbrückend, montierbar ist. Wie durch einen Pfeil 77 angedeutet ist, ist die Verbindungseinheit 76 in unterschiedlichen Montagestellungen an die Rückseiten der Prozessmodule 69 und 70 montierbar, so dass die an den benachbarten Fluidbus-Schnittstellen 74 und 75 der beiden Prozessmodule 69 und 70 endenden Kanalabschnitte je nach Montagestellung in unterschiedlichen Verbindungsmustern miteinander verbunden werden. Die Verbindungseinheit 76 trägt für jede mögliche Montagestellung jeweils ein Informationsfeld 78, 79 zur Anzeige des damit einstellbaren Verbindungsmusters. Dabei liegt dasjenige Informationsfeld, z. B. 78, welches in der jeweiligen Montagestellung der Verbindungseinheit 76 das damit eingestellte Verbindungsmuster anzeigt, zusammen mit weiteren Informationsfeldern 80, welche an den Prozessmodulen 67 bis 71 ausgebildet sind und deren Prozessfunktionen anzeigen, in einer gemeinsamen Sichtebene.

Für die übrigen Kanäle des Fluidbusses 73 sind in den Prozessmodulen 67 bis 71 weitere Fluidbus-Abschnitte ausgebildet, die an den einander gegenüberliegenden Seiten der Prozessmodule 67 bis 71 in weiteren Fluidbus-Schnittstellen 81 enden und bei der Aneinanderreihung der Prozessmodule 67 bis 71 unter Umgehung der Verbindungseinheiten, z. B. 76, unmittelbar miteinander verbunden werden. In gleicher Weise ergänzen sich auch innerhalb der Prozessmodule 67 bis 71 ausgebildete Daten- und Energieversorgungsbus-Abschnitte zu dem Daten- und Energieversorgungsbus 72.

## Patentansprüche

1. System zur automatisierten Behandlung von Fluiden mit aneinanderreihbaren, austauschbaren Prozessmodulen (1-4; 39-43; 67-71), die jeweils eine Steuerungseinheit (5) und eine von dieser zur Durchführung einer modulspezifischen Prozessfunktion im Rahmen der Behandlung der Fluide steuerbare Fluideinheit (6) aufweisen, und mit mindestens einer Verbindungseinheit (21; 51; 76), mit der je nach Montagestellung mindestens zwei unterschiedliche Verbindungsmuster eingestellt werden können, wobei die Steuerungseinheiten (5) über einen den Prozessmodulen (1-4; 39-43; 67-71) gemeinsamen Datenbus (11; 48; 72) und die Fluideinheiten (6) über einen mehrere Kanäle aufweisenden Fluidbus (13; 49; 73) miteinander verbunden sind, wobei für zumindest einen Teil der Kanäle innerhalb jedes Prozessmoduls (1-4; 39-43; 67-71) ein Fluidbus-Abschnitt (18) ausgebildet ist, der an seinen Enden Fluidbus-Schnittstellen (19; 52; 74, 75) aufweist, und wobei zwischen die jeweils benachbarten Fluidbus-Schnittstellen (19; 52; 74, 75) zweier aufeinanderfolgender Prozessmodule (1-4; 39-43; 67-71) die mindestens eine Verbindungseinheit (21; 51; 76) in mindestens zwei unterschiedlichen Montagestellungen schaltbar ist, in denen sie die an den benachbarten Fluidbus-Schnittstellen (19; 52; 74, 75) der beiden Prozessmodule (1-4; 39-43; 67-71) jeweils endenden Kanalabschnitte in unterschiedlichen Verbindungsmustern miteinander verbindet.

2. System nach Anspruch 1, **dadurch gekennzeich**- net, dass der Fluidbus-Abschnitt in jedem Prozessmodul (39-43; 67-71) nur für einen Teil der Kanäle des Fluidbusses (49; 73) ausgebildet ist, dass für übrigen Kanäle des Fluidbusses (49; 73) in dem Prozessmodul (39-43; 67-71) ein weiterer Fluidbus-Abschnitt ausgebildet ist und dass bei der Aneinanderreihung von Prozessmodulen (39-43; 67-71) die Kanalabschnitte der weiteren Fluidbus-Abschnitte unter Umgehung von zwischengeschalteten Verbindungseinheiten (51; 76) direkt miteinander verbindbar sind. (Fig. 5, 6)

3. System nach Anspruch 1 oder 2, **dadurch gekennzeichnet, dass** die Fluidbus-Schnittstellen (19; 52) an den bei Aneinanderreihung der Prozessmodule (1-4; 39-43) einander zugewandten Seiten der Prozessmodule (1-4; 39-43) ausgebildet sind und dass die Verbindungseinheit (21; 51) zwischen die Prozessmodule (1-4; 39-43) montierbar ist. (Fig. 1, 2, 5)

4. System nach Anspruch 1 oder 2, **dadurch gekenn- zeichnet,** dass die Fluidbus-Schnittstellen (19; 74, 75) an bei Aneinanderreihung der Prozessmodule (1-4; 67-71) fluchtenden Seiten der Prozessmodule (1-4; 67-71) ausgebildet sind und dass die Verbindungseinheit (21; 76) an diese Seiten, dabei jeweils zwei aufeinanderfolgende Prozessmodule (1-4; 67-71) überbrückend, montierbar ist. (Fig. 3, 6)

5. System nach einem der vorangehenden Ansprüche, **dadurch gekennzeichnet, dass** die Verbindungseinheit (51; 76) für jede mögliche Montagestellung ein Informationsfeld (57, 58; 78, 79) zur Anzeige des damit einstellbaren Verbindungsmusters trägt und dass in jeder Montagestellung der Verbindungseinheit (51; 76) das betreffende Informationsfeld (57, 58; 78, 79) ein und dieselbe Lage einnimmt. (Fig. 5, 6)

6. System nach Anspruch 5, **dadurch gekennzeichnet, dass** das Informationsfeld (57, 58; 78, 79), welches in der jeweiligen Montagestellung der Verbindungseinheit (51; 76) das damit eingestellte Verbindungsmuster anzeigt, zusammen mit weiteren Informationsfeldern (57, 58; 78, 79), welche an den Prozessmodulen (39-43; 67-71) ausgebildet sind und deren Prozessfunktionen anzeigen, in einer gemeinsamen Sichtebene liegt. (Fig. 5, 6)

7. System nach einem der vorangehenden Ansprüche, **dadurch gekennzeichnet, dass** die Verbindungseinheit (21; 51; 76) in der jeweiligen Montagestellung in eine Aufnahmevorrichtung (34; 50) einsetzbar ist, dass die Aufnahmevorrichtung (34; 50) Detektionsmittel (24, 24'; 64) zum Erkennen der jeweiligen Montagestellung aufweist und dass die Detektionsmittel (24, 24'; 64) zur Übertragung von die Montagestellung angebenden Informationen an den Datenbus (11; 48; 72) anschließbar sind.

8. System nach Anspruch 7, **dadurch gekennzeich- net ,** dass die Aufnahmevorrichtung (34) für die Verbindungseinheit (21; 76) an den Prozessmodulen (1-4; 67-71) ausgebildet ist. (Fig. 2, 3, 6)

9. System nach Anspruch 7, **dadurch gekennzeich- net ,** dass die Aufnahmevorrichtung (50) zusammen mit der in ihr eingesetzten Verbindungseinheit (21; 51) ein Verbindungsmodul (15-17; 44-47) bildet, welches bei der Aneinanderreihung der Prozessmodule (1-4; 39-43) zwischen diese einfügbar ist. (Fig. 1, 5)

10. System nach Anspruch 9, **dadurch gekenn- zeichnet,** dass innerhalb der Aufnahmevorrichtung (50) ein Datenbus-Abschnitt ausgebildet ist, der zusammen mit in den angrenzenden Prozessmodulen (1-4; 39-43) ausgebildeten Datenbus-Abschnitten den Datenbus (11; 48) bildet. (Fig. 1, 5)

11. System nach Anspruch 2 in Verbindung mit Anspruch 9 oder 10, **Dadurch gekennzeichnet, dass** für die übrigen Kanäle des Fluidbusses (49) innerhalb der Aufnahmevorrichtung (50) ein zusätzlicher Fluidbus-Abschnitt ausgebildet ist, der beim Einfügen des Verbindungsmoduls (44-47) zwischen zwei Prozessmodule (39-43) die Kanalabschnitte der in diesen Prozessmodulen (39-43) enthaltenen weiteren Fluidbus-Abschnitte miteinander verbindet. (Fig. 5)

## Claims

1. System for the automated handling of fluids, comprising gangable, interchangeable process modules (1-4; 39-43; 67-71) each having a control unit (5) and a fluid unit (6) controllable by same for carrying out a module-specific process function as part of the handling of the fluids, wherein the control units (5) are interconnected via a data bus (11; 48; 72) shared by the process modules (1-4; 39-43; 67-71) and the fluid units (6) via a fluid bus (13; 49; 73) having a plurality of channels, there being implemented for at least some of the channels within each process module (1-4; 39-43; 67-71) a fluid bus section (18) which has fluid bus interfaces (19; 52; 74, 75) at its ends, and their being connectable between the respective adjacent fluid bus interfaces (19; 52; 74, 75) of two consecutive process modules (1-4; 39-43; 67-71) a connection unit (21; 51; 76) in at least two different mounting positions in which it interconnects the channel sections respectively ending at the adjacent fluid bus interfaces (19; 52; 74, 75) of the two process modules (1-4; 39-43; 67-71) in different connection patterns.

2. System according to claim 1, **characterised in that** in each process module(39-43; 67-71) the fluid bus section is only implemented for some of the channels of the fluid bus (49; 73), that for the remaining channels of the fluid bus (49; 73) there is implemented in the process module (39-43; 67-71) another fluid bus section and that, when the process modules (39-43; 67-71) are ganged together, the channel sections of the additional fluid bus sections can be interconnected directly, bypassing interposed connection units (51; 76). (Figs. 5, 6)

3. System according to claim 1 or 2, **characterised in that** the fluid bus interfaces (19; 52) are implemented on the sides of the process modules (1-4; 39-43) facing one another when the process modules (1-4; 39-43) are ganged together and that the connection unit (21; 51) can be mounted between the process modules (1-4; 39-43). (Figs. 1, 2, 5)

4. System according to claim 1 or 2, **characterised in that** the fluid bus interfaces (19; 74, 75) are implemented on sides of the process modules (1-4; 67-71) that are in-line when the process modules (1-4; 67-71) are ganged together and that the connection unit (21; 76) can be mounted to these sides, bypassing two consecutive process modules (1-4; 67-71). (Figs. 3, 6)

5. System according to one of the preceding claims, **characterised in that**, for each possible mounting position, the connection unit (51; 76) bears an information field (57, 58; 78, 79) indicating the connection pattern that can be set therewith and that the relevant information field (57, 58; 78, 79) assumes one and the same attitude in each mounting position of the connection unit (51; 76). (Fig. 5, 6)

6. System according to claim 5, **characterised in that** the information field (57, 58; 78, 79) indicating the connection pattern set in the particular mounting position of the connection unit (51; 76) is on a common view plane with other information fields (57, 58; 78, 79) implemented on the process modules (39-43; 67-71) and indicating their process functions. (Figs. 5, 6)

7. System according to one of the preceding claims, **characterised in that** the connection unit (21; 51; 76) in the relevant mounting position can be inserted in a receiving device (34; 50), that the receiving device (34; 50) has detection means (24, 24'; 64) for detecting the relevant mounting position and that the detection means (24, 24'; 64) can be connected to the data bus (11; 48; 72) for transmitting the information giving said mounting position.

8. System according to claim 7, **characterised in that** the receiving device (34) for the connection unit (21; 76) is implemented on the process modules (1-4; 67-71). (Figs. 2, 3, 6)

9. System according to claim 7, **characterised in that** the receiving device (50) together with the connection unit (21; 51) inserted in it forms a connection module (15-17; 44-47) which, when the process modules (1-4; 39-43) are ganged together, can be inserted between same. (Figs. 1, 5)

10. System according to claim 9, **characterised in that** there is implemented within the receiving device (50) a data bus section which together with data bus sections implemented in the adjacent process modules (1-4; 39-43) forms the data bus (11; 48). (Figs. 1, 5)

11. System according to claim 2 in conjunction with claim 9 or 10, **characterised in that** for the remaining channels of the fluid bus (49) there is implemented within the receiving device (50) an additional fluid bus section which, when the connection module (44-47) is inserted between two process modules (39-43), interconnects the channel sections of the additional fluid bus sections contained in said process modules (39-43) (Fig. 5)

## Revendications

1. Système pour le traitement automatisé de fluides, comprenant des modules de processus (1-4 ; 39-43 ; 67-71) remplaçables et juxtaposables, qui présentent respectivement une unité de commande (5) et une unité de fluide (6), pouvant être commandée par celle-ci pour la réalisation d'une fonction de processus spécifique aux modules dans le cadre du traitement des fluides, et comprenant au moins une unité de raccordement (21 ; 51; 76) par laquelle, suivant la position de montage, au moins deux modèles de raccordement différents peuvent être réglés, les unités de commande ( 5 ) étant raccordées entre elles par le biais d'un bus de données ( 11 ; 48 ; 72 ) commun aux modules de processus ( 1-4 ; 39-43 ; 67-71 ), et les unités de fluides ( 6 ) étant raccordées entre elles par le biais d'un bus de fluides ( 13 ; 49 ; 73 ) ayant plusieurs canaux, un tronçon de bus de fluides ( 18 ) étant constitué pour au moins une partie des canaux à l'intérieur de chaque module de processus ( 1-4 ; 39-43 ; 67-71 ), tronçon qui a à ses extrémités des interfaces de bus de fluides ( 19 ; 52 ; 74 ; 75 ) et, entre les interfaces de bus de fluides ( 19 ; 52 ; 74 ; 75 ) respectivement voisines de deux modules de processus ( 1-4 ; 39-43 ; 67-71 ) successifs, la au moins une unité de raccordement ( 21 ; 51 ; 76 ) peut être commutée dans au moins deux positions de montage différentes, dans lesquelles elle raccorde entre eux, dans différents modèles de raccordement, les tronçons de canaux se terminant respectivement au niveau des interfaces de bus de fluides ( 19 ; 52 ; 74 ; 75 ) voisines de deux modules de processus ( 1-4 ; 39-43 ; 67-71 ).

2. Système selon la revendication 1, **caractérisé en ce que** le tronçon de bus de fluides dans chaque module de processus ( 39-43 ; 67-71 ) est constitué seulement pour une partie des canaux du bus de fluides ( 49 ; 73 ), **en ce que**, pour les autres canaux du bus de fluides ( 49 ; 73 ), un autre tronçon de bus de fluides est constitué dans le module de processus ( 39-43 ; 67-71 ), et **en ce que**, lors de la juxtaposition de modules de processus ( 39-43 ; 67-71 ), les tronçons de canaux des autres tronçons de bus de fluides peuvent être raccordés entre eux directement en contournant des unités de raccordement ( 51 ; 76 ) intercalées.

3. Système selon la revendication 1 ou 2, **caractérisé en ce que** les interfaces de bus de fluides ( 19 ; 52 ) sont constituées sur les côtés des modules de processus ( 1-4 ; 39-43 ) tournés les uns vers les autres lors de la juxtaposition des modules de processus ( 1-4 ; 39-43 ), et **en ce que** l'unité de raccordement ( 21 ; 51 ) peut être montée entre les modules de processus ( 1-4 ; 39-43 ). ( Figure 1, 2, 5 )

4. Système selon la revendication 1 ou 2, **caractérisé en ce que** les interfaces de bus de fluides ( 19 ; 74 ; 75 ) sont constituées sur des côtés des modules de processus ( 1-4 ; 67-71 ) qui affleurent lors de la juxtaposition des modules de processus ( 1-4 ; 67-71 ), et **en ce que** l'unité de raccordement ( 21 ; 76 ) peut être montée sur ces côtés, en l'occurrence en chevauchant respectivement deux modules de processus ( 1-4 ; 67-71 ) successifs. ( Figures 3, 6 )

5. Système selon une des revendications précédentes, **caractérisé en ce que** l'unité de raccordement ( 51 ; 76 ) porte, pour chaque position de montage possible, un champ d'information ( 57, 58 ; 78, 79 ) pour l'affichage du modèle de raccordement qui peut être ainsi réglé, et **en ce que**, dans chaque position de montage de l'unité de raccordement ( 51 ; 76 ), le champ d'information ( 57, 58 ; 78, 79 ) concerné adopte une seule et même position. ( Figures 5, 6 )

6. Système selon la revendication 5, **caractérisé en ce que** le champ d'information ( 57, 58 ; 78, 79 ), qui affiche dans la position de montage respective de l'unité de raccordement ( 51 ; 76 ) le modèle de raccordement ainsi réglé, est situé dans un plan de vision commun en même temps que d'autres champs d'information ( 57, 58 ; 78, 79 ) qui sont constitués sur les modules de processus ( 39-43 ; 67-71 ) et qui affichent leurs fonctions de processus. ( Figures 5, 6 )

7. Système selon une des revendications précédentes, **caractérisé en ce que** l'unité de raccordement ( 21 ; 51 ; 76 ) peut, dans la position de montage respective, être insérée dans un dispositif de réception ( 34 ; 50 ), **en ce que** le dispositif de réception ( 34 ; 50 ) présente des moyens de détection ( 24, 24'; 64 ) pour la détection de la position de montage respective, et **en ce que** les moyens de détection ( 24, 24'; 64 ) peuvent être connectés au bus de données ( 11 ; 48 ; 72 ) pour la transmission d'informations indiquant la position de montage.

8. Système selon la revendication 7, **caractérisé en ce que** le dispositif de réception ( 34 ) pour l'unité de raccordement ( 21 ; 76 ) est constitué sur les modules de processus ( 1-4 ; 67-71 ). ( Figures 2, 3, 6 )

9. Système selon la revendication 7, **caractérisé en ce que** le dispositif de réception ( 50 ) forme, avec l'unité de raccordement ( 21 ; 51 ) qui y est insérée, un module de raccordement ( 15-17 ; 44-47 ) qui peut être inséré entre ces modules de processus ( 1-4 ; 39-43 ) lors de la juxtaposition de ces derniers. ( Figures 1, 5 )

10. Système selon la revendication 9, **caractérisé en ce que**, à l'intérieur du dispositif de réception ( 50 ), il est formé un tronçon de bus de données qui forme le bus de données ( 11 ; 48 ) en commun avec des tronçons de bus de données constitués dans les modules de processus ( 1-4 ; 39-43 ) voisins.

11. Système selon la revendication 2 en liaison avec la revendication 9 ou 10, **caractérisé en ce que**, pour les autres canaux du bus de fluides ( 49 ), il est constitué, à l'intérieur du dispositif de réception ( 50 ), un tronçon de bus de fluides supplémentaire qui, lors de l'insertion du module de raccordement ( 44-47 ) entre deux modules de processus ( 39-43 ), raccorde entre eux les tronçons de canaux des autres tronçons de bus de fluides contenus dans ces modules de processus ( 39-43 ). ( Figure 5 )
